Europäisches Patentamt

European Patent Office

Office européen des brevets

(19)

(11) Publication number: **0 032 765**
A1

# (12) EUROPEAN PATENT APPLICATION

(21) Application number: 81200023.0

(22) Date of filing: **12.01.81**

(51) Int. Cl.³: **G 03 G 15/00, B 65 H 33/00**

(30) Priority: **17.01.80 NL 8000296**

(43) Date of publication of application: **29.07.81**
**Bulletin 81/30**

(84) Designated Contracting States: **DE FR GB NL**

(71) Applicant: **Océ-Nederland B.V., St. Urbanusweg 102, NL-5914 CC Venlo (NL)**

(72) Inventor: **Tiek, Fredericus, Johannes, Schillerstraat 258, Venlo (NL)**
Inventor: **Stienstra, Jan Bonne, Willem de Zwijgerstraat 520, Venlo (NL)**

(74) Representative: **Bleukx, Lucas Lodewijk Maria, Ir. et al, Océ-Nederland B.V. Patents & Information Dept Postbus 101, NL-5900 MA VENLO (NL)**

(54) **Procedure and device for transporting originals to and from the reproduction station of a copying machine.**

(57) Procedure and device for transporting originals, which may be imaged on one or on both sides, to and from the reproduction station (7) of a copying machine, in which the originals from one side of a stack are fed to the reproduction station (7) along a feed path (3) in which they are reversed an uneven number of times and from the reproduction station (7) are fed back to the other side of the stack along a first return feed path (4–5) in which they are reversed an uneven number of times, if they carry an image on one side, and along a second return feed path (4–6), in which they are reversed an even number of times, if they carry an image on both sides.

ACTORUM AG

EP 0 032 765 A1

1

# PROCEDURE AND DEVICE FOR TRANSPORTING ORIGINALS TO AND FROM THE REPRODUCTION STATION OF A COPYING MACHINE

The invention relates to a procedure for transporting originals to and from the reproduction station of a copying machine, in which the originals are fed one by one from one side of a stack to the reproduction station, and from the reproduction station are returned to the other side of the stack. The invention also relates to a device for executing this procedure.

A procedure as mentioned in the preamble, also a device for carrying out this procedure, are known from British Patent Application 2 000 749. With this known procedure the originals are fed from the bottom of a stack along different transport paths to the reproduction station of the copying machine, the transport path selected being depended on whether the original is provided with an image on a single or double side. Originals provided with an image on a single side are taken from one edge of the stack and transported along a path in which they are reversed once, whilst originals provided with an image on both sides are taken from the opposite edge of the stack and are transported along a path in which they are reversed twice. One disadvantage of this known procedure is that two sheet removal devices have to be employed, or that one sheet removal device has to be used which can be moved from one edge of the stack to the other edge. Such constructions are complicated and involve greater danger of disturbances.

The aim of the present invention is to avoid the shortcomings of the known procedure, whilst retaining the possibility of processing both originals provided with an image on a single or double side. This objective is attained in accordance with the present invention in that a procedure is provided as mentioned in the preamble, the said procedure being characterised in that the originals, during transport to the reproduction station, are transported along the same path in which they are reversed an uneven number of times, and during transport back to the stack are transported along a path in which they are reversed an uneven number of times if they are provided with an image on a single side, and along a path in which they are reversed an even number of times if they are provided with an image on both sides.

The invention also comprises a device for carrying out the procedure, the said device comprising a holder for a stack of sheetlike originals, means for removing the bottom sheet from the stack, a supply path for feeding the sheet-like original to the reproduction station of the copying machine and return feed paths for returning the original to the stack in the holder, and is characterised in that the feed path and a first return feed path are so curved that an original transported through these paths is reversed an uneven number of times in each of said paths, and that a second return feed path is provided which is curved in such a way that an original transported through this path is reversed an even number of times. The invention ensures that only one sheet removal device, for removing the originals from the stack, and stationed at a certain point needs to be employed, so that the design of a device for carrying out the procedure has been considerably simplified. Nonetheless using the procedure and device in accordance with the invention, if used in combination with a copying machine of the type described in the previously mentioned British Patent Application 2 000 749, the most customary copying modes are performed rapidly, with the advantage that the originals are always stacked in the same way in the holder, thus precluding mistakes being made by the operator. In accordance with a preferred embodiment of the invention the feed path, as also the first return feed path, are curved in such a way that an original transported through these paths is reversed once in each of said paths, whilst the second return feed path is curved in such a way that the original transported through this path is reversed twice. This ensures compact layout of the device.

In accordance with a further preferred embodiment of the invention, the first and second return feed path partially coincide, at the point where the paths separate each other a switch being provided which can occupy two positions, by means of which either the first or the second return feed path can be closed off.

The invention will now be further described with the aid of some Figures.

Fig. 1 illustrates a schematic section of an electrophotographic copying machine provided with a feed device for originals in accordance with the invention.

Fig. 2 illustrates a schematic section of the device in accordance with a preferred embodiment of the invention.

Fig. 3 illustrates a top view of the sheet pressure mechanism of the device as shown in fig. 2.

Fig. 4 illustrates a schematic section of the device for removing the bottom sheet from the stack of originals.

Fig. 5 gives a perspective frontal view of the device shown in Fig. 4.

Fig. 6A and 6B show schematically some other embodiments of the device in accordance with the invention.

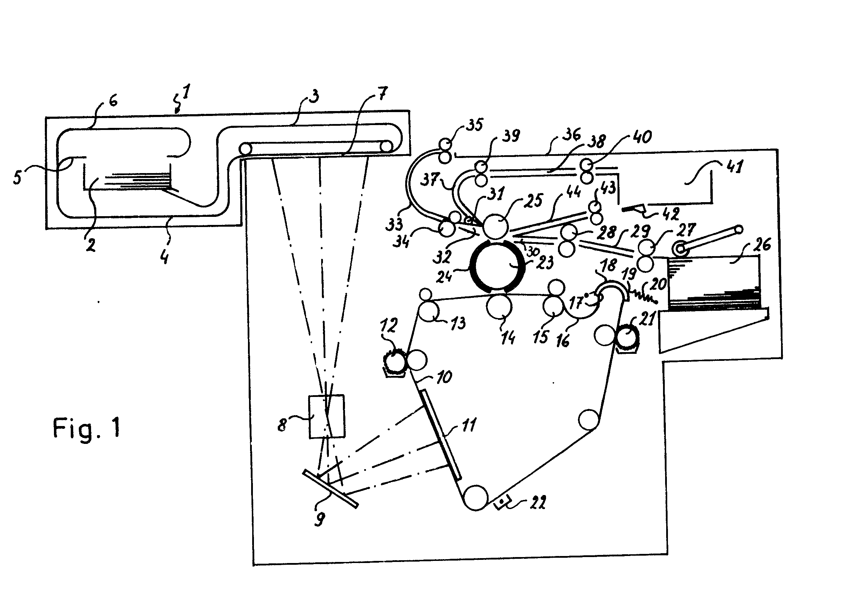

The electrophotographic copying machine in Fig. 1 comprises a feed device 1 for originals in accordance with the invention which positions the originals to be copied one by one from the holder 2 via the feed path 3 on glass plate 7 of the reproduction station of the copying machine and then, via a first return feed path comprising path sections 4 and 5, or a second return feed path comprising path sections 4 and 6, feeds them back again to the holder 2. By means of flash exposure lamps, not illustrated, the original which is positioned on the glass plate 7 is exposed, whereby via a lens 8 and a mirror 9 an image of this original is projected onto an endless photoconductive belt 10, the said belt being kept flat in the exposing path by a suction chamber 11. This belt then moves past a developing station 12 where the electrostatic charge image formed is developed by powder, and then over a drive roller 13, possibly with back pressure roller, and then over a pressure roller 14 in a transfer station. The belt 10 subsequently runs over a smooth drive roller 15, forms a loop 16 towards a stationary surface 17 and is there aligned by lateral guides 18 and by the fact that the belt is kept pressed against the smooth or hairy surface 17 by a cloth 19 tightened by a spring 20.

After this the belt moves past a cleaning station 21 where excess powder is removed by a brush and from here it goes to a corona device 22 for the application of a uniform electric charge to the photoconductive layer, so that on this, when reaching the suction chamber 11, a subsequent charge image can be formed.

Above the belt 10 at the location of the roller 14 there is a roller 23 which takes up the powder image and which, allowing for some indentation of its soft resilient covering 24, is driven at the same peripheral speed as the speed of the belt 10. Thus when the image is transferred, the powder particles from belt 10 will easily be able to adhere to the soft covering 24 of roller 23 and thus leave the belt 10. Above the roller 23 there is a pressure roller 25 which can press a sheet of copy paper against the roller 23, the said copy paper being supplied from a stack 26 via rollers 27 and 28 and guides 29 and 30. In this way the powder image is transferred to this paper.

Subsequently this paper, dependent on the copying mode moves either via the guides 32 and 33 and rollers 34 and 35 to a delivery table 36, or via the guides 37 and 38 and rollers 39 and 40 to a receiving tray 41. A switch 31 which can occupy two positions, in which either the guide 32 or guide 37 is opened, is arranged at the entry to the guides 32 and 37. From the receiving tray 41 the copy papers can with the aid of the sheet removal device 42 be fed via roller 43 and guide 44 once more to the transfer station for the printing of the rear face.

The roller 23 has two recessed components located diametrically opposite each other, here shown as components having no covering 24 at all. This means that when roller 23 is in the position as shown, it makes no contact with the belt 10.

The drive (not shown) of roller 23 is so designed that when no image transfer takes place the roller 23 stands still. The belt 10 can thus move freely underneath it and can thus transfer no contaminating powder at all to roller 23. During image transfer roller 23 performs one complete revolution: one half of a revolution in order to take up the image from the photoconductive belt and one half of a revolution in order to transfer the image to the copy paper fed underneath roller 25.

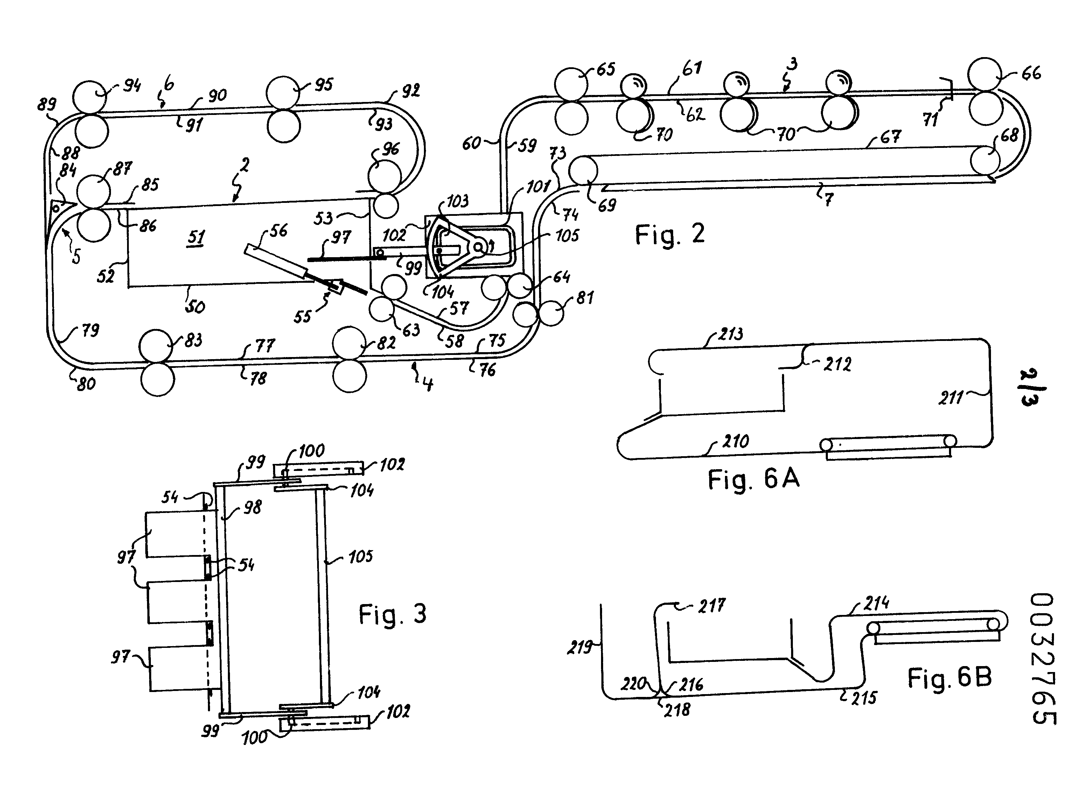

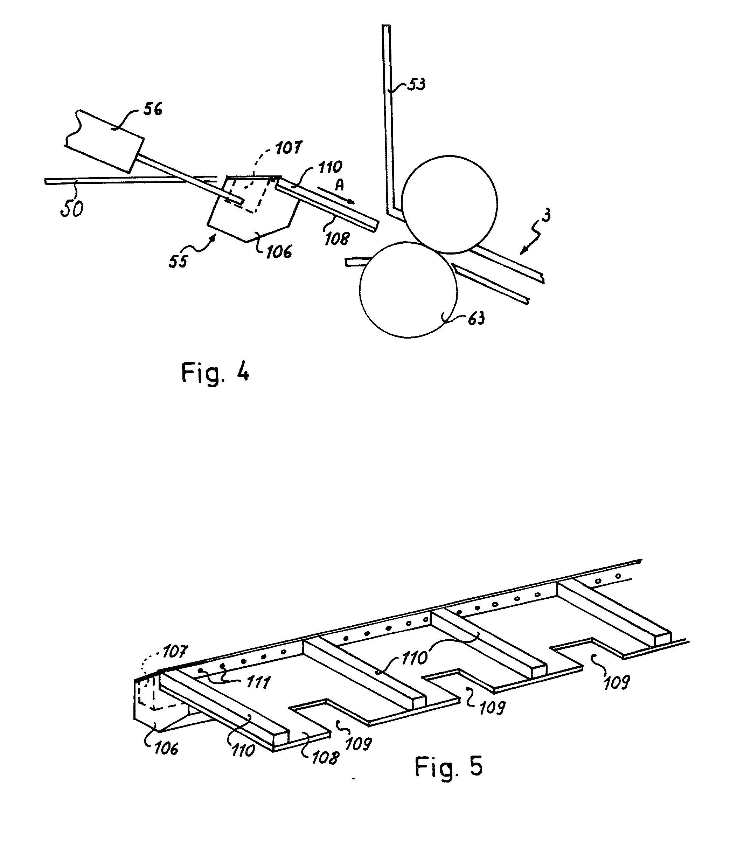

In Fig. 2 a schematic side view is given of the feed device for originals shown in Fig. 1. The device comprises a holder 2 for a stack of originals, a feed path 3 and two return feed paths, one of which consists of path sections 4 and 5 and the other of path sections 4 and 6. The holder 2 consists of a bottom plate 50 and side plates 51 and 52. The front face of the holder 2 is formed by a frame 53 which consists of a number of rods 54 (see Fig. 3) standing at some distance from each other, which are mutually connected by transverse rods not shown in the Figures, and which frame is fastened to the side plates 51 of holder 2. The bottom plate 50 terminates at some distance from the frame 53 and in this way provides an aperture at the bottom of holder 2, the sheet removal device 55 which will be described in greater detail in the following by reference to Fig. 4 and 5 being located in front of this aperture. The sheet removal device 55 can be moved by pneumatic means 56 to the entrance to the feed path 3. The feed path 3 consists of curved guide elements 57, 58, 59, 60, 61 and 62 and means of transport 63, 64, 65 and 66 which consists of rollers or a number of discs located side by side on a shaft. The feed path 3 opens out to the lower side of an endless conveyor belt 67 which passes over the rollers 68 and 69 and which, when the device is in use, extends over the reproduction station 7 of the copying machine. Prior to opening out to the endless conveyor belt 67, the feed path 3 curves through $180^0$, this ensuring that an original transported via the feed path is reversed once as compared with the position in which it was placed in the holder 2.

In the feed path there is also a positioning mechanism which ensures that the originals are placed in the correct position before being fed to the reproduction station of the copying machine. This positioning mechanism is of the type described in Netherlands Patent Application 7711928, reference being made to Fig. 19 and 20, with the distinction that now instead of the endless conveyor belts being oblique to the direction of transport, use is made of discs 70 which are oblique to the direction of transport, and furthermore that in the feed path a stop 71 is provided which can be retracted from the feed path after a fed original is positioned by the oblique transport discs against a side stop (possibly adjustable) located in the feed path, and which is not shown.

Against the exit from the feed path 3, at the other end of the endless conveyor belt 67, there is the entry for the return feed paths. These return feed paths comprise a common first path section 4 which consists of guide elements 73, 74, 75, 76, 77, 78, 79 and 80 and means of transport 81, 82 and 83. At the switch 84 the first path section 4 divides into two path sections 5 and 6, of which path section 5 is formed by guide elements 85 and 86 and means of transport 87, and path section 6 by the guide elements 88, 89, 90, 91, 92, 93 and means of transport 94, 95 and 96. The switch 84 can occupy two positions, whereby in one position path section 5, and in the other position path section 6, is opened.

The return feed path formed by path sections 4 and 5 is curved in such a way that an original transported through this path is reversed once. The return feed path formed by path sections 4 and 6 is curved in such a way that an original transported through this path is reversed twice.

To exert a slight pressure against originals placed in the holder 2, and in order to keep originals which have been returned by way of one of the return feed paths in the holder 2 separate from the originals which have still to be processed, the device shown in Fig. 1 is also provided with a pressure device which consists of a number of pressure means 97 located one after the other which project between the rods 54 of frame 53 through into the holder 2. Outside the holder 2 the pressure means 97 are firmly fastened to a rod 98, both ends of which are firmly connected with an arm 99. Close to their free ends both arms 99 are provided with a pin 100, one end of which projects into a groove 101, the said groove being located in a plate 102 which with the aid of means, not shown, is mounted against the inside of a frame plate of the device. The grooves 101 have the shape of a rectangle, the corners of which are rounded. Each pin 100 furthermore projects through a profiled aperture 103 of a cam 104, the said cam 104 being fastened to a rotatably mounted shaft 105 which can be driven by means, not shown, in the direction indicated by the arrow.

Fig. 4 and 5 illustrate the sheet removal device 55. This device includes a section 106 which extends over the entire width of the holder 2 and which incorporates a chamber 107, the said chamber being connected by way of a pipe not shown in the Figures with means of compressed air supply. A flat plate 108 which is provided with recesses 109 is fastened to the section 106. The plate 108 faces obliquely downwards and forms an angle of roughly 30° with the bottom of the holder 2. The top edge of the plate 108 is 1-2 mm below the top edge of the section 106. At regular mutual intervals narrow strips 110 with rectangular cross section and consisting of a material with a high coefficient of friction such as silicone rubber are attached to the plate 108. The strips 110 abut against the top edge of the section 106. In the portion of the section 106 which projects above the plate 108 there are at regular intervals perforations 111 which terminate in the air chamber 107 and which are between 0.5 and 2 mm in length, preferably about 1 mm, and having a diameter between 0.2 and 1 mm, preferably 0.5 mm. The number of perforations in the section 106 is not critical and can be between 30 and 120. In the embodiment illustrated here the number of perforations is 60. The operation of the device for feeding the originals in accordance with the invention is as follows.

The stack of originals to be copied is placed in the holder 2 underneath the pressure means 97 against frame 53. Air is forced into the air chamber 107 of the sheet removal device 55, the pressure in the chamber so being raised to roughly 400 kPa. The air compressed in chamber 107 flows via the perforations 111 out over the plate 108, so that a vacuum forms at the surface of the plate 108. As a result of this vacuum the unsupported portion of the lowest original in the stack in holder 2 is drawn against the strips 110 fastened to plate 108 and held against these. By moving section 106 now with the aid of pneumatic means 56 in the direction shown by arrow A, the bottom sheet is withdrawn from the stack and is fed by its leading edge into the nip between the means of transport 63 consisting of discs placed at the entry to the feed path 3 and is then transported further by these means of transport. (During the movement of the section 106 the transport discs 63 fall into the recesses 109 of plate 108). After the transportation of the fed original has been taken over by the means of transport 63, the section 106 again reverts to its initial position. During its reversion to its initial position of the section 106 the section can, similarly using pneumatic means (not shown in the Figures), be drawn slightly downwards so as to prevent damage to the sheet being transport in the meantime over the strips 110.

The original is transported in the feed path 3 and is positioned by the obliquely-placed discs 70. The stop 71 is then withdrawn from the feed path 3 and the original is transported further and eventually fed by the conveyor belt 67 onto the glass plate 7 of the copying machine. After the original has been placed in the correct position on the glass plate 7, for example after it has been fed against a stop which is present on the glass plate, the conveyor belt 67 is stopped and the original is copied. The copied original is then, possibly after retraction of the stop on the glass plate 7, fed back via the return feed path 4-5 or the return feed path 4-6 to the holder 2. Originals provided with an image on one side are transported along the return feed path 4-5, and originals provided with an image on both sides are transported along the return feed path 4-6. The originals returned to holder 2 are deposited on the pressure means 97. After all the originals placed in the holder under the pressure means 97 have been removed, the pressure means 97 come into contact with the bottom plate 50 of holder 2, as a result of which a switch not shown in the Figures is actuated and the drive means for shaft 105, not shown, are energized. The shaft 105 together with the cams 104 fastened thereto now perform one revolution in the direction indicated by the arrow. As a result of the rotation of the cams 104 the pins 100 are transported through the grooves 101 in the plates 102, and consequently the pressure means 97 are subsequently retracted from the holder 2, are raised and deposited in the holder 2 on the stack of returned originals. The next copying cycle then begins.

Using the copying device as shown in Fig. 1 the most customary copying modes can be performed rapidly with the advantage that the originals for each copying mode can be placed in the same sequence in the holder 2 of the original feed device. The various copying modes are performed as follows:

a. Copies printed on one side of originals provided with an image on one side.

The originals are placed in logical sequence, with the image side facing upwards and page 1 on top, in the holder 2 of the original feed device. The switch 84 at the entry to the return feed path sections 5 and 6 is placed in the position shown in Fig. 2, as a result of which the return feed path 4-5 in which the originals are reversed once, is opened. The originals are fed one by one via the feed path to the glass plate of the copying machine and, after having been copied, are returned to the holder via the opened return feed path and placed on the pressure means 97. The switch 31 is put into the position shown in Fig. 1 so that the copies printed on one side are delivered via the guides 32 and 33 and the rollers 34 and 35 to the delivery table 36.

b. Copies printed on both sides from originals provided with an image on one side.

The originals are placed in the holder of the original feed device as indicated in paragraph a. The switch 84 is placed in the position indicated in paragraph a. and the switch 31 in the position where the guide 37 is opened. The originals are fed one by one onto the glass plate of the copying machine, in the course of which a copy is made from the originals which are fed as the first, third, fifth etc. onto the glass plate. The copies printed on one side are fed via the guides 37 and 38 and rollers 39 and 40 to the receiving tray 41. After all originals have passed through once and returned to the holder 2, the supply of unprinted copy paper from the stack 26 is stopped, the switch 31 is placed in the position shown in Fig. 1, and the sheet removal device 42 of receiving tray 41 is switched on. The signals for this switching operations are given by the pressure means 97 from the original feed device at the moment when these pressure means come into contact with the bottom plate 50 of holder 2.

At the same moment the signal is given to the exposure device of the copying machine that during the following passage of the originals the second, fourth, sixth etc. original which is fed should be copied. During the second traverse of the originals hence the originals which were turned over during the first passage are copied, the images being printed on the unprinted sides of the copy papers printed on one side fed from receiving tray 41 via rollers 43 and guide 44 to the transfer station. The copies printed on both sides are delivered via the route mentioned in paragraph a. above to the delivery table 36.

c. Copies printed on both sides from originals provided with an image on both sides.

The originals are placed in logical sequence with page 1 facing upwards in the holder of the original feed device. The switch 84 is now placed in the position in which path section 6 is open and switch 31 in the position in which guide 37 is open.

During the first traverse of the originals those image sides are copied which had been facing upwards in the stack. The images are printed on copy paper fed from stack 26. The copies printed on one side are delivered via the guides 37 and 38 and rollers 39 and 40 to the receiving tray 41. In the return feed path the originals are reversed twice so that, as compared with the position which they originally occupied in the holder 2 of the feed device, they are placed back inverted. After the first passage of the originals the supply of unprinted copy paper from stack 26 is stopped and the sheet removal device 42 is switched on. Switch 31 is placed in the position shown in Fig. 1.

During the second passage of the originals the sides which have not yet been copied are copied and the images are printed on the unprinted sides of the copies fed from receiving tray 41.

The copies printed on both sides are delivered to delivery table 36.

Fig. 6A and 6B show schematic diagrams of two other embodiments of a device for feeding originals in accordance with the invention. In Fig. 6A the feed path is represented by the line 210. The first return feed path is formed by lines 211 and 212 and the second return feed path by lines 211 and 213. In Fig. 6B the feed path is represented by line 214. The first return feed path consists of lines 215, 216 and 217.

The second return feed path is formed successively by lines 215, 218, 219, 220 and 217.

In the embodiment shown in Fig. 6B the originals, when following the second return feed path, are fed first of all via the guides 215 and 218 into guide 219 and subsequently from guide 219 via the guides 220 and 217 to the holder. The guide 219 should be provided with means of transport, the direction of movement of which can be reversed.

CLAIMS

1. Procedure for the transportation of originals to and from the reproduction station of a copying machine, in which the originals are fed one by one from one side of a stack to the reproduction station (7) and are returned from the reproduction station (7) to the other side of the stack, c h a r a c t e r i z e d  i n  t h a t  the originals during transport to the reproduction station (7) are transported along the same path (3) in which they are reversed an uneven number of times and during the transport back to the stack are transported along a path (4-5) in which they are reversed an uneven number of times if they are provided with an image on one side, and along a path (4-6) in which they are reversed an even number of times of they are provided with an image on both sides.

2. Device for the feed and removal of sheet-like originals to and from the reproduction station¯(7) of a copying machine which device comprises a holder (2) for a stack of sheet-like originals, means (55) for removing the bottom sheet from the stack, a feed path (3) for feeding the sheet-like original to the reproduction station (7) of the copying machine and return feed paths (4-5, 4-6) for returning the original to the stack in the holder (2), c h a r a c t e r i z e d  i n  t h a t  the feed path (3) and a first return feed path (4-5) are curved in such a way that an original transported through these paths (3, 4-5) is reversed an uneven number of times in each of said paths (3, 4-5) and that a second return feed path (4-6) is provided which is curved in such a way that an original transported through this path (4-6) is reversed an even number of times.

3. Device in accordance with claim 2, c h a r a c t e r i z e d  i n  t h a t the feed path (3) and the first return feed path (4-5) are curved in such a way that an original transported through these paths (3, 4-5) is reversed once in each of said paths (3, 4-5), and that the second return feed path (4-6) is curved in such a way that an original transported through this path (4-6) is reversed twice.

4. Device in accordance with one or more of claims 2-3, c h a r a c t e r i z e d  i n  t h a t  the first (4-5) and second return feed path (4-6) as viewed from the reproduction station (7), coincide in a first portion (4).

5. Device in accordance with claims 2-4, c h a r a c t e r i z e d
i n  t h a t  the feed path (3) is provided with means (70, 71) for positioning an original.

6. Device in accordance with claims 2-4, c h a r a c t e r i z e d
i n  t h a t  the feed path (3) runs at some distance above the reproduction station (7) and then bends towards the reproduction station (7).

7. Electrophotographic copying machine provided with a feed device for originals in accordance with one or more of the preceding claims 2-6.

Fig. 1

0032765

Fig. 2

Fig. 6A

Fig. 6B

Fig. 3

Fig. 4

Fig. 5

0032765

Application number

EP 81200023.0

**European Patent Office**

**EUROPEAN SEARCH REPORT**

| Category | Citation of document with indication, where appropriate, of relevant passages | Relevant to claim |
|---|---|---|
| **DOCUMENTS CONSIDERED TO BE RELEVANT** | | |
| X | GB - A - 1 544 045 (KODAK) <br> + Fig. 1-5; page 3, claims + <br> -- | 1-7 |
| X | US - A - 4 099 150 (CONNIN) <br> + Fig. 1,3-6, 7-9; column 5, claims + <br> ---- | 1-7 |

**CLASSIFICATION OF THE APPLICATION (Int. Cl.3)**

G 03 G 15/00
B 65 H 33/00

**TECHNICAL FIELDS SEARCHED (Int. Cl.3)**

G 03 G 15/00
B 65 H 29/00
B 65 H 9/00
B 41 L 21/00

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | | |
|---|---|---|---|---|
| X | The present search report has been drawn up for all claims | | | |
| Place of search <br> VIENNA | Date of completion of the search <br> 08-04-1981 | Examiner <br> KRAL | | |

EPO Form 1503.1 06.78